# EUROPÄISCHE PATENTANMELDUNG

(11) **EP 1 600 840 A2**
(43) Veröffentlichungstag der Anmeldung: **30.11.2005**
(21) Anmeldenummer: 05101771.3
(22) Anmeldetag: 08.03.2005
(51) Int. Cl.: G05D 16/06

(54) **Druckminderer**

(30) Priorität: 24.05.2004 DE 102004025814
(71) Anmelder: HANS SASSERATH & CO KG, 41352 Korschenbroich (DE)
(72) Erfinder: Hecking, Willi, 41238 Mönchengladbach (DE)
(74) Vertreter: Weisse, Renate

(57) **Zusammenfassung**

Zur Verbesserung der Regelcharakteristik eines Druckminderers ist die Membrananordnung des Druckminderers von zwei miteinander verbundenen, gleichachsig angeordneten, in getrennten Räumen eingespannten Membranen (34,48) gebildet, die jeweils auf einer Seite vom Ausgangsdruck beaufschlagt sind. Der Druckmindere weist einen die Belastungsfeder (14) enthaltenden Oberteil (10) und einen das Regelventil (24,26) und eine vom Ausgangsdruck beaufschlagte Regelmembran (34) enthaltenden Steuerteil (18) auf. Zwischen Oberteil (10) und Steuerteil (18) ist ein Adapter (44) mit einer zweiten Regelmembran (48) eingesetzt. Der Adapter (44) weist eine Ausgangsdruckkammer (46) auf, die von der zweiten Regelmembran (48) abgeschlossen ist. Die zweite Regelmembran (48) ist von der Belastungsfeder (14) unmittelbar belastet und mit der Regelmembran (34) des Steuerteils (18) durch eine Spindel (52) verbunden, welche abdichtend aus der Ausgangsdruckkammer (46) des Adapters (44) herausgeführt ist.

## Beschreibung

Die Erfindung betrifft einen Druckminderer mit einem Regelventil, das durch eine vom Ausgangsdruck beaufschlagte, federbelastete Membrananordnung gesteuert ist.

Druckminderer haben die Aufgabe, einen Ausgangsdruck in einer Leitung, beispielsweise einer Wasserleitung, zu begrenzen. Ein Druckminderer enthält üblicherweise eine federbelastete Membran, auf welche ein Ausgangsdruck der einstellbaren Federbelastung entgegenwirkt. Mit der Membran ist ein Regelventil verbunden. Bei einem Anstieg des Ausgangsdrucks wird durch die Membran das Regelventil gegen einen Ventilsitz bewegt und der Durchfluß gedrosselt, so daß der Ausgangsdruck bei variablem Eingangsdruck im wesentlichen konstant gehalten wird.

Ein bekannter Druckminderer besteht aus einem Oberteil und einem Steuerteil. Der Oberteil ist topfförmig und enthält die Belastungsfeder und einen Mechanismus zur Einstellung der Federvorspannung. Der Steuerteil bildet einen Ventilsitz und enthält das mit diesem zusammenwirkende Regelventil. In den Steuerteil ist die Membran eingespannt. Die Membran weist einen Membranteller auf, an welchem die Belastungsfeder anliegt. Die Membran mit dem Membranteller ist mit dem Ventilteller des Regelventils verbunden.

Bekanntermaßen ist dieser zweiteilige Druckminderer als "Patrone" ausgebildet, die mit dem Steuerteil in eine in das Leitungssystem, z.B. eine Wasserleitung, eingebaute Armatur eingesetzt ist.

Bei solchen Druckminderern ist der Druckabfall an dem Regelventil bei vorgegebenem Eingangsdruck abhängig vom Durchfluß. Das bedeutet, daß bei vorgegebenem Eingangsdruck der Ausgangsdruck um so stärker absinkt, je größer der Durchfluß durch das Regelventil ist. Dieser Effekt wird wesentlich beeinflußt durch das Verhältnis von wirksamer Membranfläche und Durchmesser des Ventilsitzes des Regelventils. Weiterhin wird das Regelverhalten dadurch beeinflußt, daß Reibungskräfte, die durch die notwendige Beweglichkeit des Steuerteils entstehen, sich auf den Druckverlust auswirken.

Der Erfindung liegt die Aufgabe zugrunde, das Regelverhalten eines Druckminderers zu verbessern.

Erfindungsgemäß wird diese Aufgabe dadurch gelöst, daß die Membrananordnung von zwei miteinander verbundenen, gleichachsig angeordneten, in getrennten Räumen eingespannten Membranen gebildet ist, die jeweils auf einer Seite vom Ausgangsdruck beaufschlagt sind.

Eine solche Anordnung gestattet eine Vergrößerung der effektiven Membranfläche, ohne Vergrößerung der radialen Abmessungen des Druckminderers. Die beiden Membranen arbeiten parallel auf das Regelventil. Damit läßt sich das Verhältnis von wirksamer Membranfläche und Querschnitt des Ventilsitzes verbessern. Dadurch ergibt sich ein günstigeres Regelverhalten und ein geringerer Druckabfall an dem Druckminderer.

Eine bevorzugte Ausführung eines erfindungsgemäßen Druckminderers besteht darin, daß
(a) der Druckmindere einen die Belastungsfeder enthaltenden Oberteil und einen das Regelventil und eine vom Ausgangsdruck beaufschlagte Regelmembran enthaltenden Steuerteil aufweist, und zwischen Oberteil und Steuerteil ein Adapter mit einer zweiten Regelmembran eingesetzt ist,
(b) der Adapter eine Ausgangsdruckkammer aufweist, die von der zweiten Regelmembran abgeschlossen ist und
(c) die zweite Regelmembran von der Belastungsfeder unmittelbar belastet und mit der Regelmembran des Steuerteils durch eine Spindel verbunden ist, welche abdichtend aus der Ausgangsdruckkammer des Adapters herausgeführt ist.
Auf diese Weise können erprobte Konstruktionen von Oberteil und Steuerteil verwendet werden, wobei nur durch einen zwischengesetzten Adapter die wirksame Membranfläche bei Bedarf verändert wird.

Weitere Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: zeigt einen Längsschnitt durch einen Druckminderer mit einer zusätzlichen Membran in einem zwischen Oberteil und Steuerteil eingebauten Adapter.
- Fig.2: zeigt die Charakteristik von Druckabfall Δp über Durchfluß V für einen Druckminderer üblicher Bauart, der nur aus Oberteil und Steuerteil des Druckminderers von Fig.1 ohne zusätzliche Membran und Adapter aufgebaut ist.
- Fig.3: ist eine entsprechende Charakteristik für den in Fig.1 dargestellten Druckminderer.

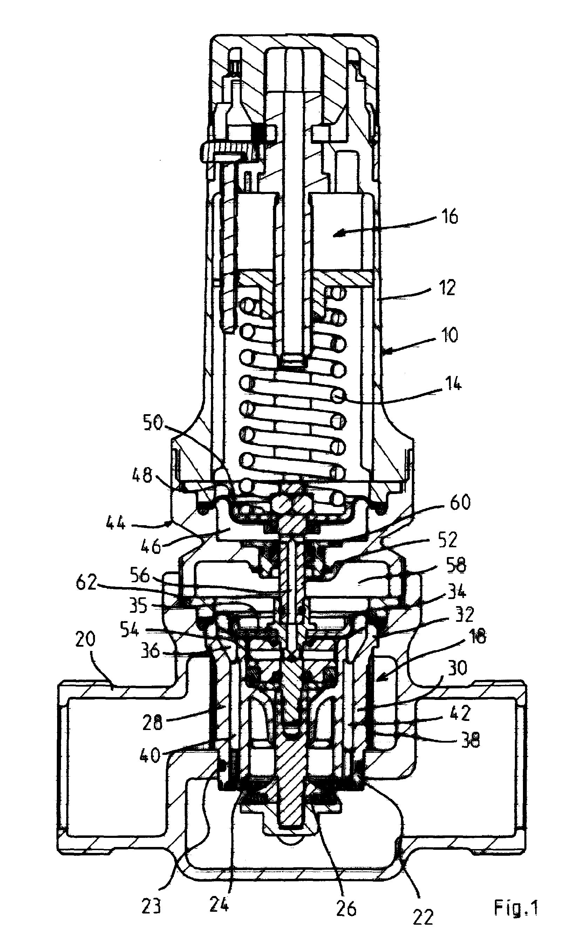

In Fig. 1 ist mit 10 der Oberteil eines Druckminderers bezeichnet. Der Oberteil weist ein topfförmiges Gehäuse 12 auf, welches eine Belastungsfeder 14 und einen Mechanismus 16 zur Einstellung und Anzeige der Vorspannung dieser Belastungsfeder 14 enthält. Dieser Mechanismus ist an sich bekannt (EP 0 650 108 A1; EP 0 972 995 A1) und daher hier nicht im einzelnen beschrieben.

Ein Steuerteil 18 ist im wesentlichen nach Art der EP 0 650 109 A1 ausgebildet. Der Steuerteil sitzt in einem Durchgang einer in ein Leitungssystem eingebauten Armatur 20.

Der Steuerteil 18 weist einen Ringkörper 22 auf, der mit einer Dichtung 23 in einem Durchbruch in einer Trennwand der Armatur sitzt. Der Ringkörper 22 bildet einen Ventilsitz 23. Der Ventilsitz 24 bildet mit einem Ventilteller 26 ein Regelventil. Der Ringkörper 22 ist über Stege 28, 30 mit einem schalenförmigen Teil 32 verbunden, das durch eine Membran 34 mit einem Membranteller 35 abgeschlossen ist und eine Ausgangsdruckkammer 36 abschließt. Der Steuerteil 18 ist von einem zylindrischen Filter oder Sieb 38 umgeben. Das zu regelnde Druckmittel strömt von einem Einlaß der Armatur 20 radial durch das Filter oder Sieb 38 hindurch und durch den Ventilsitz 24 zu dem Auslaß der Armatur. Dabei wird das Druckmittel von dem Ventilteller 26 gedrosselt.

Die Auslaßdruckkammer 38 ist über Kanäle 40 und 42 in den Rippen 28 bzw. 30 mit dem Ausgangsdruck beaufschlagt. Dieser Ausgangsdruck wirkt von unten in Fig.1 auf die Membran 34. Die Membran 34 und der Membranteller 35 sind, ähnlich wie bei der EP 0 650 109 A1 mit dem Ventilteller 26 verbunden.

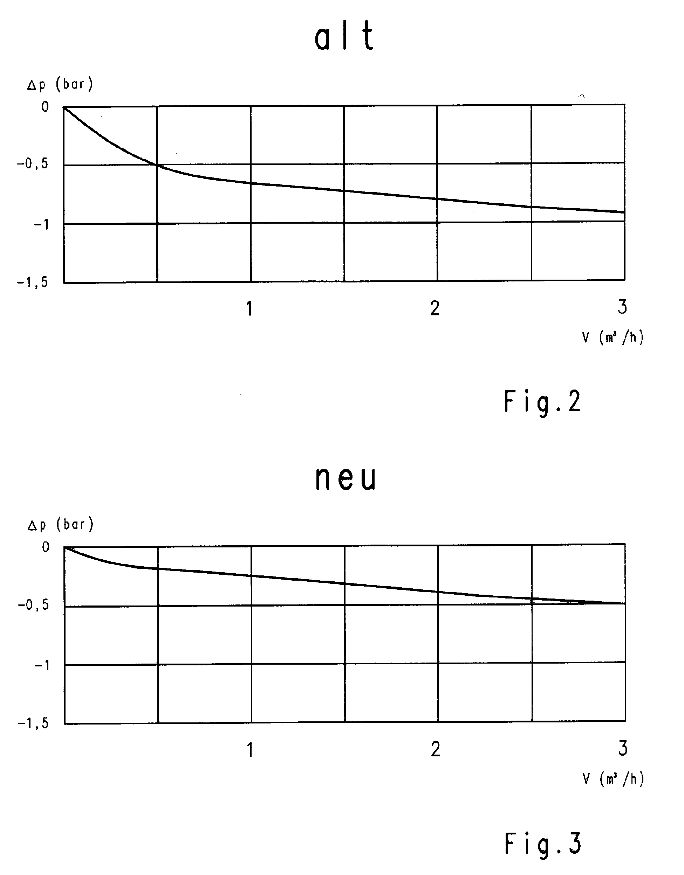

Bei der EP 0 650 109 A1 liegt die Belastungsfeder unmittelbar an einem Membranteller der Membran des Steuerteils an. Der Ausgangsdruck wirkt an der Membran der Federvorspannung der Belastungsfeder entgegen. Bei überwiegendem Ausgangsdruck wird der Ventilteller gegen den Ventilsitz bewegt und der Durchgang des Regelventils gedrosselt. Eine solche Anordnung mit einer Membran führt zu der in Fig.2 dargestellten Charakteristik.

Bei dem Druckminderer von Fig. 1 ist zwischen den Oberteil 10 und den Steuerteil 18 ein Adapter 44 angebracht. Der Adapter 44 bildet ebenfalls eine Ausgangsdruckkammer 46, die zu dem Oberteil 10 hin durch eine zweite Membran 48 abgeschlossen ist. Die zweite Membran 48 weist einen Membranteller 50 auf. An dem Membranteller 50 liegt die Belatungsfeder 14 an. Die zweite Membran 48 und der Membranteller 50 sind durch eine Spindel 52 mit der Membran 34 des Steuerteils 18 und dem Membranteller 35 verbunden. Die beiden Membranen 34 und 48 sind gleichachsig zueinander angeordnet. Die Spindel 52 verläuft längs der Achse. Die Spindel 52 und das Teil 54, das die Membran 34 mit dem Ventilteller 26 verbindet, weisen einen Längskanal 56 mit Querkanälen auf, über welchen die Ausgangsdruckkammer 46 ebenfalls mit dem Ausgangsdruck beaufschlagt ist. Auf diese Weise wirkt die Belastungsfeder 14 sowohl auf die Membran 48 als auch über die Spindel 52 auf die Membran 34. An beiden Membranen wirkt sie dem Ausgangsdruck entgegen. Damit wird die wirksame Membranfläche verdoppelt.

Der Adapter 44 bildet eine dem Steuerteil 18 zugewandte Vertiefung 58. Diese bildet eine Kammer, welche die Bewegung der Membran 34 des Steuerteils 18 zulässt. Die Spindel 52 ist über eine Kunststoffbuchse 60 aus der Ausgangsdruckkammer 46 des Adapters 44 herausgeführt. Die Verwendung einer Kunststoffbuchse verringert die zusätzliche Reibung und verbessert dadurch die Regelcharakteristik. Mit der beschriebenen Konstruktion ergibt sich eine flachere Charakteristik, wie sie in Fig.3 dargestellt ist.

Zwischen den Adapter 44 und den Steuerteil 18 ist ein Kunststoffring 62 eingesetzt, der einen Kontakt von Metall auf Metall verhindert.

## Patentansprüche

1. Druckminderer mit einem Regelventil, das durch eine vom Ausgangsdruck beaufschlagte, federbelastete Membrananordnung gesteuert ist, **dadurch gekennzeichnet, daß** die Membrananordnung von zwei miteinander verbundenen, gleichachsig angeordneten, in getrennten Räumen eingespannten Membranen (34,48) gebildet ist, die jeweils auf einer Seite vom Ausgangsdruck beaufschlagt sind.

2. Druckminderer nach Anspruch 1, **dadurch gekennzeichnet, daß**
(a) der Druckmindere einen die Belastungsfeder (14) enthaltenden Oberteil (10) und einen das Regelventil (24,26) und eine vom Ausgangsdruck beaufschlagte Regelmembran (34) enthaltenden Steuerteil (18) aufweist, und zwischen Oberteil (10) und Steuerteil (18) ein Adapter (44) mit einer zweiten Regelmembran (48) eingesetzt ist,
(b) der Adapter (44) eine Ausgangsdruckkammer (46) aufweist, die von der zweiten Regelmembran (48) abgeschlossen ist und
(c) die zweite Regelmembran (48) von der Belastungsfeder (14) unmittelbar belastet und mit der Regelmembran (34) des Steuerteils (18) durch eine Spindel (52) verbunden ist, welche abdichtend aus der Ausgangsdruckkammer (46) des Adapters (44) herausgeführt ist.

3. Druckminderer nach Anspruch 2, **dadurch gekennzeichnet, daß** der Druckminderer als Patrone ausgebildet ist, die mit einem das Regelventil enthaltenden Steuerteil (18) in eine in ein Leitungssystem eingebaute Armatur eingesetzt ist.

4. Druckminderer nach Anspruch 2 oder 3, **dadurch gekennzeichnet, daß** die Ausgangsdruckkammer (46) des Adapters mit dem Ausgangsdruck über einen in der Spindel (52) verlaufenden Verbindungskanal (56) beaufschlagt ist.

5. Druckminderer nach einem der Ansprüche 2 bis 4, **dadurch gekennzeichnet, daß** die Spindel (52) über eine Kunststoffbuchse (60) aus der Ausgangsdruckkammer (46) des Adapters (44) herausgeführt ist.
